# EUROPEAN PATENT APPLICATION

(11) **EP 2 927 920 A1**
(43) Date of publication of application: **07.10.2015**
(21) Application number: 12889630.5
(22) Date of filing: 03.12.2012
(51) Int. Cl.: H01G 11/84, H01G 11/24, H01G 11/38

(54) **METHOD FOR MANUFACTURING ELECTRICAL DOUBLE LAYER CAPACITOR ELECTRODES**

(71) Applicant: Obschestvo s ogranichennoy otvetstvennostyu 'Tovarischestvo energeticheskikh i electromobilnikh proektov', Moscow 127018 (RU)
(72) Inventor: DOLGOLAPTEV, Anatoly Vasilyevich, Moskovskaya oblast pos. Pestovo 140071 (RU); DASHKO, Oleg Grigorievich, Moskovskaya oblast g. Korolev 141077 (RU); SHKOLNIKOV, Evgeny Iosifovich, Moscow 115419 (RU); BULDYAEV, Alexandr Fedorovich, Moskovskaya oblast g. Schelkovo 141100 (RU); VERVIKISHKO, Darya Evgenievna, Smolenskaya oblast g. Smolnesk 214018 (RU); YANILKIN, Igor Vitalyevich, g. Kazan 420140 (RU); KISELEVA, Elena Alexandrovna, Moskovskaya oblast g. Podolsk 142100 (RU); ZUBOV, Vadim Aleksandrovich, Moscow 109443 (RU)
(74) Representative: Ehlich, Eva Susanne
(86) International application number: PCT/RU2012/001003
(87) International publication number: WO 2014/088439

(57) **Abstract**

What is disclosed is a method of fabricating electrodes for supercapacitors, wherein the activated carbon is mixed with a binding material within a time period long enough for completion of the coagulation process, following which the mass thus obtained is packed to remove the dispersed medium and is used for formation (molding) of the electrodes.

## Description

### Technical Field

The present invention relates to design of energy-storage electric capacitors which store energy by charge accumulation at the interface between two media, the electrode and the electrolyte, and therefore are called "electric double-layer capacitors" (EDLC), "supercapacitors", "hybrid capacitors", "hyper capacitors" (Japan), "ultracapacitors" (Germany, USA), "electrochemical capacitors" (France, Canada), and "ionistors" (Russia and other CIS countries).

Their main advantage of the EDLC over the conventional electrolytic capacitors resides in their increased specific energy. Some types of such capacitors can accumulate a specific energy exceeding 10 kJ/kg and discharge it into a load with a specific power of the order of 1-10^{kW}/kg (www.kite.ru/articles/condenser/2005_6_12.php).

To this must be added a great possible number of "charge-discharge" cycles, reliability and durability as well as a wide operating temperature range.

This unique combination of characteristics of the EDLC to a large extent predetermines the possibility and practicability of their use, first of all, in the electric transport and hybrid applications. Another promising field is the use of the EDLC as "the compensators" in power plants having unstable characteristics, such as wind-driven electric generating system, electric power stations with solar batteries, tidal power stations.

More specifically, the invention relates to the main component of the capacitors, namely, the electrode.

### Background Art

Normally, the EDLC electrodes are fabricated from activated carbon which is combined (mixed) with a binding material (binder), usually polymeric.

Known in the art is a method of fabricating EDLC electrodes by mixing the particles of activated carbon with polymer particles having an average size of 0.08 - 0.09 of the average size of the carbon particles and heating the mixture to the polymer particle softening temperature (USA patent 7,110,242).

The closest to the present invention is the method of fabricating the electrodes for supercapacitors as disclosed in the RF patent No. 2427052. According to this method the activated carbon is mixed with a polymeric binder, an organic solvent and electrically conductive additive which may be multi-wall carbon nanotubes and/or technical carbon. The said mixture is subjected to fibrillation, packed to form a belt and then heat treated.

Unexpectedly, the authors of the present invention have found that the quality of the electrodes made from activated carbon is markedly affected by the duration of stirring of the activated carbon with the binding material. They came to the conclusion that such a stirring should be continued up to the moment when the coagulation process is completed with the stirred mass becoming jelly-like. This moment comes if the mixing is continued for a fairly long time, from 10 to 30 minutes (depending on the balance between the carbon and binder in the stirred mass of the activated carbon and binder, which may vary from 1 to 20% of the binder and the total mass of the mixture).

Also important for the invention are the characteristics of the activated carbon used: the size of its particles should not exceed 50 µm; pore radius, from 0.5 to 3 nm; volume of microscopic pores (to be determined with the aid of benzene adsorption isotherms), not less than 0.3 cm³/g.

### Detailed Description of the Invention

The invention relates to the technology of fabrication of supercapacitor electrodes as well as to the electrode fabricated according to this technology and the capacitor having the electrodes fabricated to this technology.

The method of fabrication of the electrodes comprises a process of preparation of the electrode mass and a process of formation of the electrodes from this mass.

The electrode mass preparation process comprises the following operations:
(1) Preparation of the mixture of activated carbon and a polymeric binder. The activated carbon may be of different kinds: charcoal, black coal, coke, rice hulls based carbon, etc.

The size of the carbon particles must be less than 50 µm; it would be appropriate that the radius that the pore radius be within 0.5 - 3 nm; the volume of microscopic pores, determined with the aid of benzene adsorption isotherms, not less than 0.3 cm³/g_{.}

It is practicable to use a water fluoroplastic suspension in the amount of 1 - 20 % of the total mass as the binder.
(2) A mixture of activated carbon and binder is placed into a mixer and stirred within a time (10 - 30 minutes) long enough for completion of the coagulation process.
(3) The coagulated mass is packed (densified) by removing the dispersed medium from it. The densification procedure may be performed with the use of different mechanisms, such as rolls, worms, etc. It would be appropriate to continue the densification to achieve a porosity of 50-90%.

The electrode formation process may comprise the following operations:
1) Making a belt from the electrode mass by passing the latter through the rolls;
2) Fabrication of individual electrodes from said belt by cutting the latter. To make the electrodes as thick as 0.1 - 0.9 mm, several layers of the belt may be placed one upon another.

It is practicable to carry on the process of formation (or molding) of the electrodes at a temperature of 200 - 300 °C.

### Embodiment 1

Activated charcoal (average size of particle, 23 µm; volume of pores with radii below 3 nm, 0.8 cm³/g) was mixed with 2 % of fluoroplastic suspension Φ4 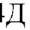 and ethyl alcohol. The mixture was stirred for 20 minutes for coagulation. The mass obtained was then packed by passing it 8 times through the rolls and addition of several layers. The electrode belt with a thickness of 400 µm and porosity of 80% was heated at 200 °C for two hours. The electrodes cut from the belt were impregnated with sulfuric acid in a vacuum for 0.5 hour and at atmospheric pressure for 0.5 hour. Then the electrodes were assembled to form a supercapacitor cell. The compression force was 10 atm. Then the electrode was subjected to an electrochemical test. The energy capacity of the supercapacitor cell was 9.7 W*h/kg of dry carbon and 3.7 W*h/kg of the total mass of carbon and electrolyte.

### Embodiment 2

Activated rice hulls based charcoal (average size of particle, 9 µm; volume of pores with radii below 3 nm, 0.7 cm³/g) was mixed with 15 % of fluoroplastic suspension Φ4 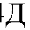 and ethyl alcohol. The mixture was stirred for 10 minutes for coagulation. The mass obtained was packed by passing it 8 times through the rolls and by addition of several layers. The electrode belt with a thickness of 300 µm and porosity of 75% was heated at 300 °C for two hours. The electrodes cut from the belt were impregnated with sulfuric acid in a vacuum for 0.5 hour and at atmospheric pressure for 0.5 hour. Then the electrodes were assembled to form a supercapacitor cell. The compression force was 30 atm. Then the electrode was subjected to an electrochemical test. The energy capacity of the supercapacitor cell was 8.6 W*h/kg of dry carbon and 3 W*h/kg of the total mass of carbon and electrolyte.

### Industrial Applicability

The information received about the consumer qualities of the capacitors using the electrodes fabricated in accordance with the present invention provides ample evidence of their successful use as supercapacitors.

## Claims

1. A method of fabrication of electrodes for electric double-layer capacitors, comprising:
- use of activated carbon with particle size less that 50 µm;
- mixing said carbon with a binder within a time period long enough for completion of the coagulation process;
- densification (packing) of the said mass by removal of the dispersed medium;
- formation (molding) of the electrodes from said packed mass.

2. A method according to claim 1, wherein the activated carbon has a pore radius within 0.5 - 3 nm.

3. A method according to claim 1 or 2, wherein the activated carbon has a volume of microscopic pores, determined with the aid of benzene adsorption isotherms, not les than 0.3 cm³/g.

4. A method according to any of claims 1 - 3, wherein the mass of the carbon and binder in the amount of 1 - 20 % of the total mass is stirred for 10 - 30 minutes.

5. A method according to claim 1 or 4, wherein a water fluoroplastic suspension is used as a binder.

6. A method according to claim 1, wherein the densification (packing) of the mixed mass of carbon and binder is performed by passing the mass through the rolls.

7. A method according to claim 1 or 6, wherein the mass densification is continued to attain a porosity of 50 - 90 %.

8. A method according to claim 1 or 6, wherein the electrodes are formed of several layers of the densified (packed) mass to attain a thickness of 0.1 - 0.9 mm.

9. A method according to any of the preceding claims, wherein the electrodes are formed (molded) at a temperature of 200 - 300 °C.

10. An electrode for an electric double-layer capacitor, fabricated by a method disclosed in any of claims 1 - 9.

11. An electric double-layer capacitor comprising electrodes fabricated by a method disclosed in any of claims 1 - 9.
